# EUROPÄISCHE PATENTSCHRIFT

(11) **EP 0 752 735 B1**
(45) Veröffentlichungstag und Bekanntmachung des Hinweises auf die Patenterteilung: **06.12.2000**
(21) Anmeldenummer: 96110351.2
(22) Anmeldetag: 27.06.1996
(51) Int. Cl.: H01Q 1/24, H04B 1/38

(54) **Antennenanordnung für Mobilfunkgeräte**
Antenna device for mobile communication terminals
Dispositif d'anntenne pour des terminaux de communication mobiles

(30) Priorität: 06.07.1995 DE 19524288
(43) Veröffentlichungstag der Anmeldung: 08.01.1997
(73) Patentinhaber: DeTeMobil Deutsche Telekom MobilNet GmbH, 53227 Bonn (DE)
(72) Erfinder: Müller, Dietmar, Dipl.-Ing., 53227 Bonn (DE)
(74) Vertreter: Riebling, Peter, Dr.-Ing.

(56) Entgegenhaltungen:
- EP-A- 0 648 023
- EP-A- 0 649 227
- WO-A-95/03549
- WO-A-95/04386
- DE-C- 4 221 121

## Beschreibung

Die vorliegende Erfindung beschreibt eine Antennenanordnung für Mobilfunkgeräte, insbesondere Funktelefone, (Amateur-) Funkgeräte und sonstige vorzugsweise tragbare Funkgeräte.

Tragbare Mobilfunkgeräte, sogenannte "Handies" sind mittlerweile weit verbreitet. Trotz ihrer geringen Größe verfügen die Geräte über eine hohe Hochfrequenzleistung (HF-Leistung) und besitzen für die Aufrechterhaltung einer Funkverbindung eine Antenne, die z. B. als gekürzte Lambda/4-Antenne realisiert wird.

Mit diesem bisher bekannten Antennentyp wird die HF-Leistung in fast alle Richtungen abgestrahlt. Aufgrund des körpernahen Einsatzes dieser Mobilfunkgeräte und der recht hohen abgestrahlten Leistung kam die Diskussion auf, daß diese Geräte womöglich durch die abgestrahlten, elektromagnetischen Wellen die Gesundheit des Benutzers beeinträchtigen können. Bis heute ist jedoch eine Gesundheitsschädigung durch Mobiltelefone nicht nachweisbar. Dennoch sind die Hersteller bestrebt, jegliches Risiko zu minimieren. Es wird nach Möglichkeiten gesucht, um Gesundheitsschädigungen durch mobiles Telefonieren mit Sicherheit auszuschließen.

Aus dem Stande der Technik sind die EP 0 649 227 A1, die WO-A95 04386 und die WO-A-95 03549 bekannt. Die EP 0 649 227 A1 beschreibt ein Handfunkgerät und Fahrzeugfunkgerät mit einstellbarer Richtantenne. In dieser Druckschrift wird ein Handfunkgerät mit aus mehreren Einzelelementen bestehender Antenne, bei der verschiedene Richtwirkungen einstellbar sind, beschrieben, wobei die Einzelelemente auf einem Kreis angeordnet sind. Die Einstellung der Richtwirkung der wirksamen Antennenteile erfolgt dabei phasengesteuert, wobei die ausgewählten Teilantennen mit entsprechend deren gegenseitigen Abstand phasenverschobenen Signalen beaufschlagt werden. Dazu werden jeweils sich auf der Kreisanordnung gegenüberliegend angeordnete Antennenelemente in Zusammenwirkung benutzt um eine Signalverstärkung zu erzielen. Nach den in dieser Druckschrift angeführten Angaben ist bei einer Dämpfung von 3 dB in der Eingangsleistung zur Antennenanordnung in Gegenüberstellung mit einer nicht gerichteten Antenne immer noch die selbe Ausgangsleistung möglich. Das bedeutet einerseits einen entsprechend reduzierten Energieverbrauch für die Energieversorgung und anderseits eine Reduzierung der Funkbelastung für die Raumausdehnungen die nicht unmittelbar für die Übertragung der Signale benötigt werden. Somit könnte in diesen nicht angestrahlten Raumbereichen die selbe Sendefrequenz erneut verwendet werden, wie dies eben aufgrund der Ausbildung der Antenne als Richtfunkantenne möglich ist. Diese Druckschrift beschreibt im wesentlichen also eine Richtfunkantenne für mobilen Einsatz, die dazu dient das Sendesignal des Funkgerätes in die Richtung zu verstärken in welcher sich die Antenne befindet, mit der der Funkverkehr geführt wird, und die Sendeleistung des Funkgerätes in die übrigen Richtungen aus den genannten Gründen möglichst gering zu halten.

Aus der WO-A-95 03549 geht eine zusammengesetzte Antenne für mit der Hand gehaltene oder transportable Kommunikationseinrichtungen. Es wird dabei eine Einrichtung beschrieben, bei der Einzelelemente der Antennenanordnung so ausgeführt sind, daß sie jeweils die selbe Ausbildung wie die übrigen, die Antennenanordnung vervollständigenden Elemente aufweisen, und in bestimmten Abständen zueinander angeordnet sind. Die Abstände der einzelnen Antennenelemente zueinander sind dabei so gewählt, daß sie jeweils einen bestimmten Faktor der Wellenlänge einer benutzten Funkfrequenz darstellen. Dieser Faktor wird beispielsweise in den Ansprüchen mit Werten zwischen der 0,3 und 0,1 -fachen Wellenlänge angegeben. Die Länge der einzelnen Antennenstäbe liegt dabei zwischen dem 0,1 und 0,7 -fachen der zu empfangenden Wellenlänge. Die Funktion liegt im Grunde auch darin, zu empfangende, unkorrelierte Signale der einzelnen Antennenteile zu verstärken.

Die WO-A-95 03549 zeigt ein Verfahren und eine Vorrichtung zur Überwachung der Abstrahlungsenergie von Sendeeinrichtungen bezogen auf eine bestimmte Zeiteinheit. Dabei wird darauf geachtet, daß der Benutzer einer mobilen Funkvorrichtung in einer bestimmten Zeiteinheit nur einer vorgebbaren Strahlungsleistung ausgesetzt wird. Die Überwachung erfolgt dabei in integraler Weise, so daß kontinuierlich der Wert an Strahlung mit einem vorgebbaren Wert vergleichbar ist, und bei überschreiten des Grenzwertes eine Leistungsreduzierung erfolgt. Dabei ist es jedoch nicht möglich die abgegebene Strahlung in Richtung des Mobilfunknutzers selektiv zu minimieren, so daß dieser ständig nur einer möglichst geringen Belastung ausgesetzt wird.

Aufgabe der Erfindung ist es, die Abstrahlrichtung eines Mobilfunkgerätes nach bestimmten Kriterien zu regeln.

Gelöst wird diese Aufgabe durch die technische Lehre des Patentanspruches 1.

Wesentliches Merkmal der Erfindung ist, daß das Mobilfunkgerät anstelle von nur einer Antenne erfindungsgemäß mehrere Antennen aufweist, die vorzugsweise als planare Antennen im Gehäuse des Mobilfunkgerätes integriert sind. Jede dieser Antennen stellt für sich ein eigenständiges Antennensystem dar, wobei die abgestrahlte HF-Leistung der jeweiligen Antenne derart geregelt werden kann, daß die abgestrahlte Leistung in Richtung zum Körper des Benutzers minimiert wird. Die zum Benutzer abgestrahlte Leistung wird demnach so verringert, so daß die vom Körper des Benutzers absorbierte HF-Leistung minimal wird.

Grundlage der Erfindung ist die Tatsache, daß der Wellenwiderstand des freien Raumes (Z0=120 PI Ohm) sich von dem Wellenwiderstand im menschlichen Gewebe (ZM) unterscheidet. Erfindungsgemäß wird der Wellenwiderstand für jede der Antennen mittels eines Impedanzsensors ermittelt und eine Kontrolleinheit für die weitere Auswertung zur Verfügung gestellt. Die Kontrolleinheit kann nun für jede Antenne die Abweichung der aktuellen Impedanz zu der Imdepanz des freien Raumes ermitteln. Dieser Differenzwert ist ein Maß für die absorbierte HF-Leistung im menschlichen Gewebe. Die Kontrolleinheit regelt darauf die Leistung jeder einzelnen Antenne derart, daß die abgestrahlte HF-Leistung zum Benutzer hin minimal wird, zugleich aber die abgestrahlte HF-Leistung zu einer Empfangsstation maximal wird.

Die Regelung der abgestrahlten Antennenleistungen wird in zeitlichen Intervallen wiederholt, so daß sichergestellt wird, daß zu jedem Zeitpunkt eine optimale HF-Leistungsabstrahlung besteht.

In einer weiteren Ausgestaltung ist es vorgesehen, die Antennenleistung nicht individuell zu regeln, sondern die jeweils "schlecht" angepaßten Antennen mittels Schaltelementen ganz abzuschalten.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Dabei zeigen:
- Figur 1:: eine mögliche Anordnung der Antennen in einem Mobilfunkgerät,
- Figur 2:: eine Prinzipschaltung der an Steuerlogik für die Antennen,
- Figur 3:: eine weitere Ausfühungsform der an Steuerlogik für die Antennen.

Erfindungsgemäß können prinzipiell n Antennen vorgesehen werden, wobei n eine natürliche Zahl größer gleich 2 darstellt. In der Praxis wird die Anzahl der benutzten Antennen auf vielleicht zwei bis zehn beschränkt.

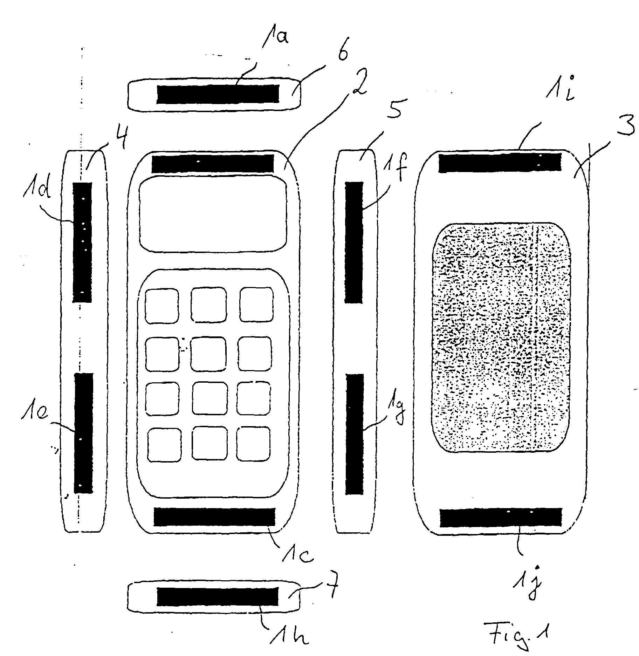

Figur 1 zeigt eine mögliche Anordnung von zehn Antennen 1a - 1j im Gehäuse 2 - 7 eines Mobilfunkgerätes.

Die Antennen 1a - 1j sind vorzugsweise als planare Streifenantennen ausgebildet, wobei hier jeweils zwei Antennen 1b, 1c am frontseitigen Gehäuseteil 2, jeweils zwei Antennen 1i, 1j am rückseitigen Gehäuseteil 3, jeweils zwei Antennen 1d, 1e beziehungsweise 1f, 1g an den seitlichen Gehäuseteilen 4, 5 und jeweils eine Antenne 1a bzw. 1h am oberen bzw. unteren Gehäuseteil 6, 7 angebracht sind.

Natürlich ist die Anzahl der Antennen sowie die Anordnung der Antennen im Gehäuse nach dieser Ausführungsform nicht als beschränkend aufzufassen. Je nach Größe des Mobilfunkgerätes, der Höhe der abgestrahlten Leistung und anderen Faktoren, kann die Anzahl der Antennen und deren Anordnung variieren.

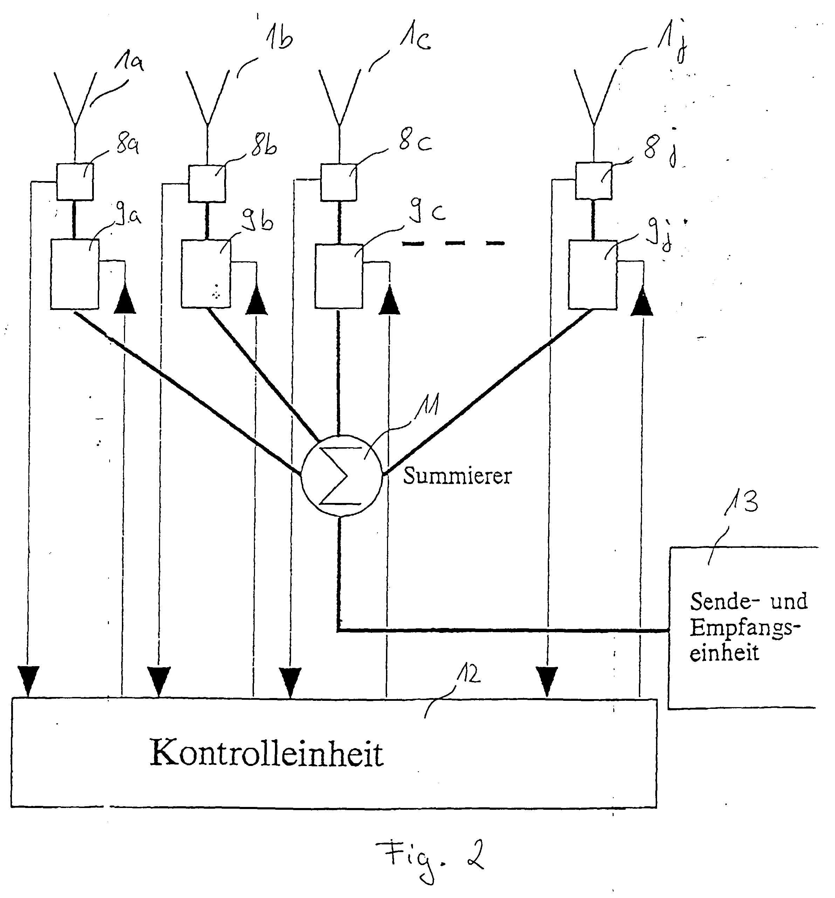

Figur 2 zeigt eine Prinzipschaltung der Ansteuerlogik für die Antennenanordnung. Während des Sendebetriebes des Mobilfunkgerätes wird der Wellenwiderstand der einzelnen Antennen 1a - 1j von jeweils einem, jeder Antenne zugeordneten Inpedanzsensors 8a - 8j ermittelt und dieser ermittelte Wert einer Kontrolleinheit 12 für eine weitere Auswertung zur Verfügung gestellt. Die Kontrolleinheit 12 ermittelt die Differenz der gemessenen Wellenwiderstände und dem Wellenwiderstand des freien Raumes, welche ein Maß für die vom menschlichen Körper absorbierte HF-Leistung darstellt.

Anhand dieses Abweichungswertes regelt die Kontrolleinheit die Leistung der einzelnen Antennen 1a - 1j über regelbare Dämpfungsglieder 9a - 9j derart, daß die zum Körper hin abgestrahlte Leistung minimal wird und zugleich die zu einer Empfangsstation abgegebene Leistung maximal wird. Die Ermittlung der Wellenwiderstände und Regelung der Antennenleistung wird in zeitlichen Intervallen wiederholt, so daß sichergestellt ist, daß die HF-Leistung nur zu den Antennen geleitet wird, welche an den freien Raum angepaßt sind. In der Zeichnungsfigur ist außerdem die Sende- und Empfangseinheit 13 des Mobilfunkgerätes dargestellt, welche die Gesamtantennenleistung zunächst über einen Summierer 11 gleichmäßig an die Antennen 1a - 1j weiterleitet.

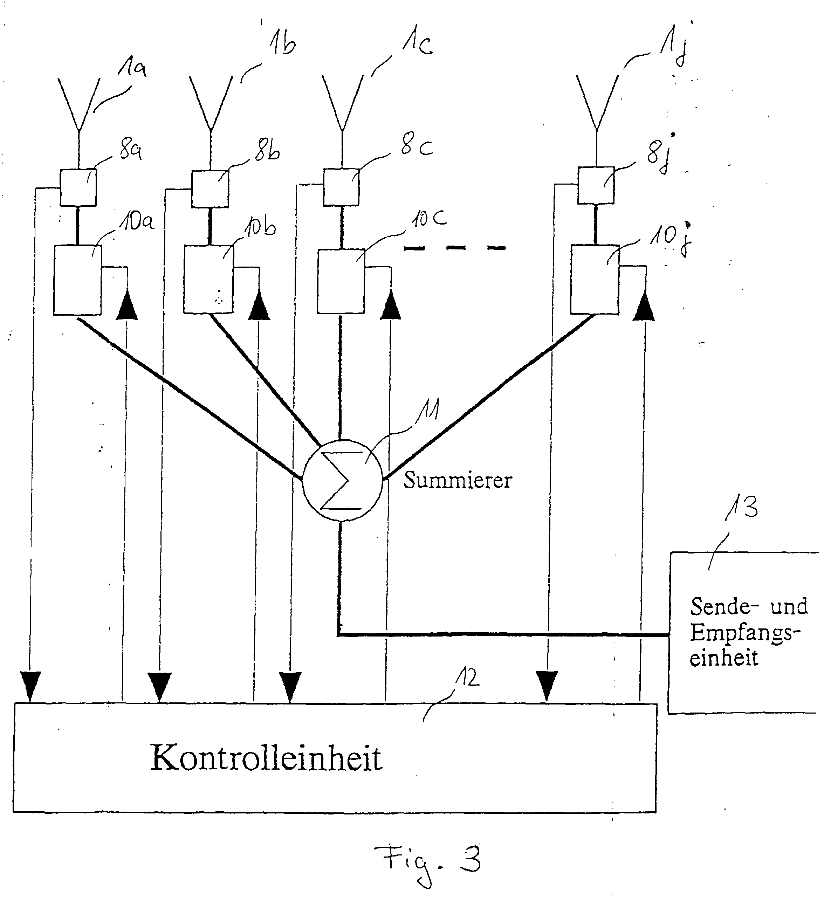

Figur 3 zeigt im wesentlichen eine zu Figur 2 identische Ansteuerlogik für das Antennenarray, wobei aber anstelle der regelbaren Dämpfungselemente 9a - 9j nach Figur 2 lediglich Schaltelemente 10a - 10j verwendet werden, um die Antennen 1a bis 1j zu- oder abzuschalten. Die Verwendung von Schaltelementen 10a - 10j stellt die einfachste Form einer Regelung der Antennenleistung dar, und ist zudem kostengünstiger als die Verwendung von regelbaren Dämpfungselementen 9a - 9j.

### Zeichnungslegende

- 1a - 1j: Antenne
- 2: Gehäuseteil
- 3: "
- 4: "
- 5: "
- 6: "
- 7: "
- 8a - 8j: Impedanzschalter
- 9a - 9j: Dämpfungselement
- 10a - 10j: Schalter
- 11: Summierer
- 12: Kontrolleinheit
- 13: Sende/Empfangseinheit

## Patentansprüche

1. Antennenanordnung für Mobilfunkgeräte, insbesondere tragbare Mobilfunkgeräte, wobei am Mobilfunkgerät mehrere Antennen (1..n; n>=2) vorgesehen sind, **dadurch gekennzeichnet**, daß der Wellenwiderstand jeder einzelnen Antenne (1a-1j) mittels eines Impedanzsensors (8a-8j) gemessen wird und die jeweils von den Antennen (1a-1j) abgestrahlte HF-Leistung mittels den Antennen (1a-1j) zugeordneten Dämpfungsgliedern (9a-9j) in Abhängigkeit des gemessenen Wellenwiderstandes geregelt wird.

2. Antennenanordnung für Mobilfunkgeräte nach Anspruch 1, **dadurch gekennzeichnet**, daß die Antennen (1a-1j) am Gehäuse (2-7) des Mobilfunkgeräts angebracht sind.

3. Antennenanordnung für Mobilfunkgeräte nach Anspruch 1, **dadurch gekennzeichnet**, daß die Antennen (1a-1j) im Gehäuse (2-7) des Mobilfunkgerätes integriert sind.

4. Antennenanordnung für Mobilfunkgeräte nach einem der Ansprüche 1 bis 3, **dadurch gekennzeichnet**, daß die Antennen (1a-1j) vorzugsweise als planare Antennen ausgebildet sind.

5. Antennenanordnung für Mobilfunkgeräte nach einem der Ansprüche 1 bis 4, **dadurch gekennzeichnet**, daß die jeweils von den Antennen (1a-1j) abgestrahlte Leistung durch ein zugeordnetes Schaltelement (10a-10j) geschaltet wird.

6. Antennenanordnung für Mobilfunkgeräte nach einem der Ansprüche 1 bis 5, **dadurch gekennzeichnet**, daß eine Kontrolleinheit (12) vorgesehen ist, welche alle notwendigen Meß- und Regelfunktionen übernimmt.

## Claims

1. Antenna arrangement for mobile radio sets, in particular portable mobile radio sets, wherein a plurality of antennas (1..n; n>=2) are provided on the mobile radio set, characterized in that the characteristic impedance of each individual antenna (1a-1j) is measured by means of an impedance sensor (8a-8j) and the high-frequency power emitted by the individual antennas (1a-1j) is regulated as a function of the measured characteristic impedance by means of attenuators (9a-9j) assigned to the antennas (1a-1j).

2. Antenna arrangement for mobile radio sets according to Claim 1, characterized in that the antennas (1a-1j) are mounted on the casing (2-7) of the mobile radio set.

3. Antenna arrangement for mobile radio sets according to Claim 1, characterized in that the antennas (1a-1j) are integrated in the casing (2-7) of the mobile radio set.

4. Antenna arrangement for mobile radio sets according to any one of Claims 1 to 3, characterized in that the antennas (1a-1j) are preferably configured as planar antennas.

5. Antenna arrangement for mobile radio sets according to any one of Claims 1 to 4, characterized in that the power emitted by the individual antennas (1a-1j) is switched by an assigned switch element (10a-10j).

6. Antenna arrangement for mobile radio sets according to any one of Claims 1 to 5, characterized in that a control unit (12) which performs all necessary measuring and regulating functions is provided.

## Revendications

1. Dispositif formant antenne pour des appareils de radiocommunication mobiles, en particulier pour des appareils de radiocommunication portables, sur lesquels plusieurs antennes (1..n; n>=2) sont prévues, **caractérisé** en ce que la résistance caractéristique de chaque antenne individuelle (1a-1j) est mesurée à l'aide d'un capteur d'impédance (8a-8j) et la puissance haute fréquence émise par les antennes (1a-1j) est réglée en fonction de l'impédance caractéristique mesurée, à l'aide d'atténuateurs (9a-9j) associés aux antennes (1a-1j).

2. Dispositif formant antenne pour des appareils de radiocommunication mobiles selon la revendication 1, **caractérisé** en ce que les antennes (1a-1j) sont montées sur le boîtier (2-7) de l'appareil de radiocommunication mobile.

3. Dispositif formant antenne pour des appareils de radiocommunication mobiles selon la revendication 1, **caractérisé** en ce que les antennes (1a-1j) sont intégrées au boîtier (2-7) de l'appareil de radiocommunication mobile.

4. Dispositif formant antenne pour des appareils de radiocommunication mobiles selon l'une des revendications 1 à 3, **caractérisé** en ce que les antennes (1a-1j) sont conçues de préférence comme des antennes planes.

5. Dispositif formant antenne pour des appareils de radiocommunication mobiles selon l'une des revendications 1 à 4, **caractérisé** en ce que la puissance émise par les antennes (1a-1j) est actionnée par un élément d'actionnement associé (10a-10j).

6. Dispositif formant antenne pour des appareils de radiocommunication mobiles selon l'une des revendications 1 à 5, **caractérisé** en ce qu'il est prévu une unité de commande (12) qui assure toutes les fonctions de mesure et de réglage nécessaires.
